# EUROPEAN PATENT SPECIFICATION

(11) **EP 1 493 303 B1**
(45) Date of publication and mention of the grant of the patent: **22.08.2007**
(21) Application number: 03746265.2
(22) Date of filing: 10.04.2003
(51) Int. Cl.: H04R 19/04, H04R 25/00

(54) **MICROPHONE ASSEMBLY WITH AUXILIARY ANALOG INPUT**
MIKROFONBAUGRUPPE MIT EINEM HILFSANALOGEINGANG
ENSEMBLE MICROPHONE AVEC ENTREE ANALOGIQUE AUXILIAIRE

(30) Priority: 10.04.2002 US 371138 P
(43) Date of publication of application: 05.01.2005
(73) Proprietor: Sonion A/S, 4000 Roskilde (DK)
(72) Inventor: DERUGINSKY, Michael, DK-3400 Hiller d (DK); POULSEN, Jens, Kristian, DK-2640 Hedehusene (DK); BOSCH, Jozef, Johannes, Gerardus, NL-1056 KB Amsterdam (NL)
(74) Representative: Plougmann & Vingtoft A/S
(86) International application number: PCT/DK2003/000244
(87) International publication number: WO 2003/088709

(56) References cited:
- WO-A-00/74437
- WO-A-02/17839
- DE-A- 19 544 546
- US-A- 5 796 848
- US-A1- 2002 106 091

## Description

### FIELD OF THE INVENTION

The present invention relates to a microphone assembly and, in particular, to a microphone assembly comprising a transducer, a pre-amplifier, controllable switching means and an analog-to-digital (A/D) converter.

### BACKGROUND OF THE INVENTION

Currently, a typical microphone assembly used in portable phones (e.g., mobile or cellular phones) or in hearing aids converts acoustical signals to analog audio signals, which are transmitted from the microphone assembly along a signal line to an external A/D converter for digitization.

As the analog audio signals travel from the microphone assembly to the A/D converter they are undesirably susceptible to electromagnetic interference (EMI) caused by the presence of high frequency signals (normally around 1-2 GHz). To reduce the effects of EMI, the current practice in the mobile phone industry is to use external capacitors to de-couple the high frequency signal to "clean" the analog audio signals before digitization. After digitization, the resulting digital output signals are largely insensitive to EMI. Accordingly, it is desirable to convert the acoustical signals to digital output signals as soon as possible - e.g. by integrating or build-in the A/D converter inside the microphone casing - to prevent EMI from degrading signal integrity.

DE 195 44 546 describes a microphone assembly comprising a transducer for receiving acoustic Waves through a sound inlet port, and for converting received acoustic waves to analog audio signals whereas for each of the audio sources, a dedicated A/D-converter is provided.

US 5,796,848 discloses a digital hearing aid with a microphone. In order to avoid EMI an A/D converter is positioned within the microphone casing whereby the A/D converter is shielded against EMI.

Patent application US 2002/0106091 A1 discloses a digital microphone assembly for use for example in a mobile phone. The digital output signal of the digital microphone assembly is effectively shielded against EMI. In order to save space it is possible to implement all electrical parts of the microphone assembly monolithically on one chip.

Microphone assemblies with integrated A/D converters such as disclosed in US 5,796,848 and US 2002/0106091 A1 are thus advantageous with respect to low susceptibility to EMI as well with respect to saving space. However, in cases where external analog sources, such as headsets, are to be connected to e.g. a portable phone, a separate A/D converter is needed in order to digitize the analog audio signal from the headset. Within hearing aids a similar need for a separate A/D converter may arise in cases where an analog signal, e.g. from a telecoil unit, is to be selected as an alternative to built-in microphones in the hearing aids. Within hearing aids analog electrical signals from hi-fi equipment such as a CD player may also be of interest to connect to a hearing aid. Such separate A/D converter increases the cost of manufacturing the portable device, and thereby making the portable device less attractive to potential customers. In addition, the presence of a second A/D converter will increase power consumption.

Therefore, there is a need for a microphone assembly that uses the built-in A/D converter for converting analog signals generated by external analog devices - such as head-sets, telecoil units or other audio equipments such as hi-fi sets. In this way, the use of additional, external A/D converters may be avoided. However, this contradicts the requirement for digital microphone assemblies with reduced number of terminals. The number of terminals is crucial regarding production costs and requirement for space available for the microphone assembly within the actual application.

It is an object of the present invention to provide such microphone assembly - i.e. a microphone assembly capable of handling and digitizing externally generated analog audio signals with the lowest number of terminals possible.

### SUMMARY OF THE INVENTION

The above-mentioned object is complied with by providing, in a first aspect, a microphone assembly comprising
- a transducer for receiving acoustic waves through a sound inlet port, and for converting received acoustic waves to analog audio signals,
- a pre-amplifier having an input and an output terminal, the input terminal being connected to the transducer so as to receive analog audio signals from the transducer,
- switching means having one or more input terminals, and an output terminal, a first input terminal of the one or more input terminals being connected to the output terminal of the pre-amplifier so as to receive amplified analog audio signals from the pre-amplifier, and
- an analog-to-digital converter having an input and an input/output terminal, the input terminal being connected to the output terminal of the switching means so as to convert received analog audio signals to digital audio signals.

Preferably, the switching means is configured as electronic switching means.

Preferably, the transducer is a silicon-based transducer comprising a silicon back-plate arranged adjacent and substantially parallel to a flexible diaphragm which, preferably, is fabricated from silicon. The silicon diaphragm and the silicon back-plate may form a capacitor in combination so as to form a condenser microphone.

The switching means may comprise two input terminals, where a second input terminal of the switching means is adapted to receive an auxiliary analog audio signal. Individual signal processing units/circuit may be connected to each input terminal whereby e.g. auxiliary analog audio signal of different characteristics (for example different signal level) may be provided to the input terminals. The auxiliary analog audio signal may, alternatively, be superimposed on a supply voltage level provided to the microphone assembly. In the latter embodiment, no specific "auxiliary" terminal is required. This may be an important issue in order to save space and terminal connections and thereby reduce costs.

The swithcing means may be controlled/toggled by an electrical signal received on a separate external terminal. However, more preferably the switching means may be controlled/toggled by the providing of a predetermined supply voltage level to the microphone assembly. Alternatively, the switching means may be controlled/toggled by a control signal superimposed on a supply voltage level provided to the microphone assembly.

An advantage of the above-mentioned embodiments using the supply voltage terminal is that no specific "control signal terminal" is required - thus, important space and costs may be saved.

In case the switching means has more than two input terminals, each of the one or more input terminals, other than the first input terminal, may be adapted to receive an auxiliary analog audio signal.

The switching means may be controlled by a characteristic of a received auxiliary analog audio signal. This characteristic may be a DC voltage level of the received auxiliary analog audio signal. Alternatively, this characteristic may be an AC signal level amplitude of the received analog audio signal. An AC signal level amplitude exceeding a certain threshold may indicate that the auxiliary analog signal source is active and therefore should be selected by the switching means instead of the signal from the microphone preamplifier.

Alternatively, the switching means may be controlled by characteristics of an input/output signal provided to the input/output terminal of the analog-to-digital converter. A digital data bus may constitute this input/output signal.

Independent on the number of input terminals, the switching means may be controlled by a coded clock signal provided to the microphone assembly. The coding of the clock signal may be implemented by e.g. keeping the clock signal constant (set equal to zero or one) over a predetermined time period.

The microphone assembly may further comprise filter means, e.g. a high-pass filter, between the transducer and the analog-to-digital converter. This filter means may be positioned between the pre-amplifier and the switching means so as to filter amplified analog audio signals. Alternatively, the filter means may be positioned between the switching means and the analog-to-digital converter. Alternatively, the filter means may be positioned between the auxiliary input and the switching means.

The analog-to-digital converter may comprise a sigma-delta modulator.

In order to save space and reduce cost, the pre-amplifier, the switching means and the sigma-delta modulator are preferably integrated on a monolithic chip so as to form an integrated circuit. Part of the filter means may also be integrated on the chip.

Alternatively, the pre-amplifier, the switching means, the analog-to-digital converter, and at least part of the filter means may be implemented on separate chips so as to form separate electronic circuits.

The microphone assembly may further comprise a digital filter, such as a digital decimation low-pass filter, connected to the output terminal of the sigma-delta modulator, said digital filter forming part of the monolithic integrated circuit.

The microphone assembly may further comprise a low-pass filter between the pre-amplifier and the switching means so as to low-pass filter amplified analog audio signals. A band-pass filter may also, or in addition, be positioned between the pre-amplifier and the switching means.

The microphone assembly may further comprise an amplifier between the filter means and the switching means so as to amplify the filtered analog audio signals. The amplifier may form part of a monolithic integrated circuit further comprising the pre-amplifier, the switching means, the filter means and the analog-to-digital converter.

The microphone assembly may further comprise a capacitor, said capacitor being adapted to be charged by a clock signal provided to the microphone assembly, and being adapted to provide power to the microphone assembly. The providing of power to the microphone assembly is initiated when a sufficient amount of energy has been provided to the capacitor. After this stage, the capacitor is being charged continuously by the clock signal. In this way it is possible to reduce the number of external terminals of the microphone assembly by one since power and clock can be provided via a single external terminal.

The microphone assembly may, via the input/output terminal of the analog-to-digital converter, be connected to a pure digital signal, processor (DSP) for further signal processing.

In a second aspect, the present invention relates to a portable unit comprising a microphone assembly according to the first aspect. This portable unit may be selected from the group consisting of hearing aids, assistive listening devices, mobile recording units, such as MP3 and minidisk recorders; and mobile communication units, such as mobile or cellular phones.

The combination of the digital microphone having an internal electronic switch and an internal A/D converter and optionally a pure DSP overcomes several aforementioned disadvantages associated with prior art systems in which a separate A/D converter is required for each external component that is to be connected to the device/unit housing the microphone assembly according to the present invention. By having microphones with internal switches and A/D converters promote flexibility in that a single microphone assembly may be capable of digitizing analog signals from several external analog components.

In addition, the use of a pure DSP simplifies the design of a mobile phone and lowers manufacturing costs because pure DSPs are less expensive to manufacture compared to DSPs which also contain analog circuitry.

Modern mobile phones are based on digital signal processing, i.e. the microphone signal is converted into a digital signal for further processing. The present invention is very suitable for use in such mobile phones since a majority of these mobile phones need to have an interface for simple, low cost analog-type head-sets based on analog microphones. Using the present invention, the use of separate A/D converters are avoided since the microphone assembly according to the present invention takes care of the conversion to the digital domain.

Modern hearing aids are also based on digital signal processing of a signal from an integrated microphone positioned within the hearing aid. However, it is still common to use these hearing aids in combination with an analog telecoil unit or connected directly to hi-fi sets. With a microphone assembly according to the present invention A/D conversion of an analog signal from such equipment is provided by the microphone assembly thus eliminating the need for a separate A/D converter.

### BRIEF DESCRIPTION OF THE DRAWINGS

The foregoing and other advantages of the invention will become apparent upon reading the following detailed description and upon reference to the following drawings, where
FIG. 1 is a functional diagram of a mobile phone housing an embodiment of the present invention,
FIG. 2 is a functional diagram of a hearing aid comprising a telecoil unit which is connected to a microphone assembly according to the present invention,
FIG. 3a shows a graph with an example of an analog input voltage to the microphone assembly of FIG. 2 in an active state of the telecoil unit, and
FIG. 3b shows the same graph as in FIG. 3a but in a deactivated state of the telecoil unit.

While the invention is susceptible to various modifications and alternative forms, specific embodiments will by way of examples be described in detail herein. It should be understood, however, that the invention is not intended to be limited to the particular forms disclosed. Rather, the invention is to cover all modifications, equivalents, and alternatives falling within the scope of the invention as defined by the appended claims.

### DETAILED DESCRIPTION OF THE INVENTION

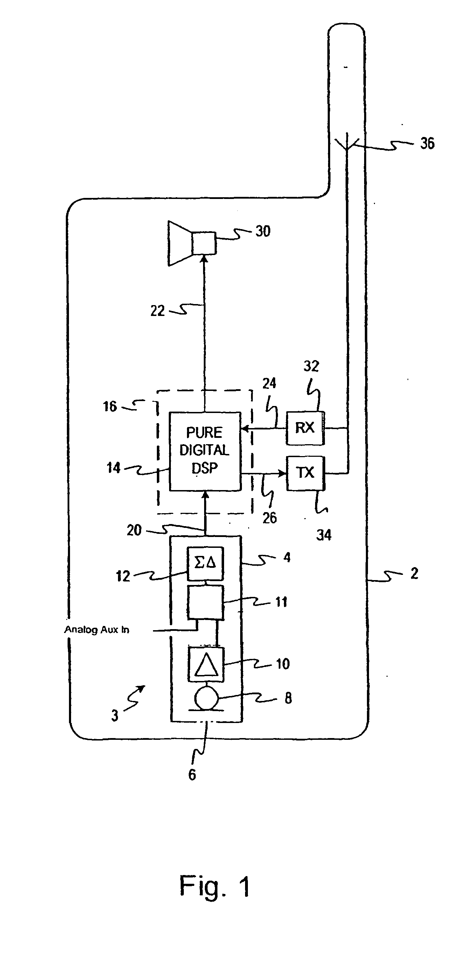

FIG. 1 shows an example of use of the microphone assembly according to the first aspect of the present invention.

A mobile phone 2 shown in FIG. 1 generally includes a microphone assembly 3, a pure digital signal processor (pure digital DSP) 14, a speaker assembly 30, an RF receiver unit 32, an RF transmitter unit 34, and an antenna 36. The microphone assembly 3 comprises a microphone assembly casing 4 that houses transducer 8, microphone pre-amplifier 10, and analog-to-digital (A/D) converter 12. In addition to providing structural integrity to the entire microphone assembly 3, the microphone assembly casing 4 shields or protects transducer 8, microphone pre-amplifier 10, and A/D converter 12 against undesired high frequency EMI. The microphone assembly casing 4 is preferably composed of an electrically conducting material, such as steel or aluminium, or metallized non-conductive materials, such as metal particle-coated plastics.

Acoustical energy is received through sound inlet 6 by transducer 8. In a preferred embodiment, transducer 8 comprises an electret assembly that includes a flexible diaphragm that moves in response to exposure to acoustical energy. The movement of the flexible diaphragm results in an electrical signal and, thus, transducer 8 converts the acoustical energy into electrical energy. This electrical energy is provided as analog audio signals to microphone pre-amplifier 10, which amplifies the analog audio signals to an appropriate level for A/D converter 12. Pre-amplifier 10 may include more than one gain stage. A/D converter 12 converts the analog audio signals to digital output signals.

In a preferred embodiment, A/D converter 12 is implemented as a sigma-delta modulator, which converts the analog audio signals into a serial digital bit stream. Alternatively, A/D converter 12 may be, for example, a flash or pipeline converter, a successive approximation converter, or any other suitable A/D converter. The serial digital bit stream may be transmitted on line 20 to pure digital DSP 14 for further processing. Pure digital DSP 14 does not contain analog circuitry and does not process analog signals. Rather, the pure digital DSP 14 only contains digital circuitry (circuitry that is adapted to only process digital signals) and only processes digital signals. Thus, the input signals on lines 20, 24 to and the output signals on lines 22, 26 from the pure digital DSP 14 are only in a digital format.

Mobile phone 2 in FIG. 1 is provided with an auxiliary analog input terminal, Analog Aux In. This auxiliary analog input terminal is adapted to receive an auxiliary analog signal. The input terminal connected to an input terminal on the switching means 11 which is capable of switching between the pre-amplifier output signal and a provided auxiliary analog signal - e.g. from a headset having an analog microphone.

In FIG. 1, switching means 11 is shown with two input terminals, one terminal connected to pre-amplifier 10 and another terminal connected to the Analog Aux In terminal of mobile phone 2. However, there is, in principle, no limitation with regard to the number of input terminals. Thus, switch 11 may be provided with N input terminals - each of them being adapted to receive an auxiliary analog signal. Alternatively, and instead of providing a separate input terminal, an analog input terminal may be combined with a power supply terminal on the microphone assembly. In this may, space for a terminal may be saved.

As mentioned previously, switching means 11 may be controlled in a variety of ways in that the switching may be controlled by the providing of a predetermined supply voltage level to the microphone assembly. Thus, switch 11 may be toggled if the level of the supply level comes within a predetermined range of a predetermined voltage level.

Alternatively, the switching means 11 may be controlled by a control signal superimposed on a supply voltage level provided to the microphone assembly.

In another embodiment, switching means 11 may be controlled by a characteristic of a received auxiliary analog audio signal. This characteristic may be a DC or an AC voltage level of the received auxiliary analog audio signal.

In yet another embodiment, switching means 11 may also be controlled by characteristics of a digital data bus signal provided to the input/output terminal of the analog-to-digital converter. Even further, switching means 11 may be controlled by a coded clock signal provided to the microphone assembly. The coding of the clock signal may be implemented by e.g. keeping the clock signal constant (set equal to zero or one) over a predetermined time period.

Pure digital DSP 14 processes the digital output signals from line 20 and provides digital signals for transmission on line 26 to the RF transmitter unit 34. The RF transmitter unit 34 converts the digital signals for transmission into RF signals, which are transmitted by the antenna 36. Similarly, the antenna 36 provides RF signals to the RF receiver unit 32, which provides received digital signals on line 24 to the pure digital DSP 14. The pure digital DSP 14 processes the received digital signals and provides digital audio output signals on line 22 to the speaker assembly 30. The digital audio output signals on line 22 may be PDM-or PWM-coded signals. The speaker assembly 30 converts the digital audio output signals to acoustical signals that will be heard by the operator.

The mobile phone 2 shown in FIG. 1 is not the only device in which the present invention is operable. The mobile phone 2 was selected for illustration purposes only, and the present invention contemplates many other devices besides mobile phones. Examples of other devices include, without limitation, portable phones, portable audio or video recording systems, hearing aids, personal digital assistants, wearable microphones (wired or wireless), and any other device which requires a microphone that is miniature in size and which requires a raw or formatted digital audio output.

The microphone assembly according to the present invention may further include a high-pass filter (not shown) connected between the microphone pre-amplifier and switching means. The high-pass filter blocks DC components in the signals between the microphone pre-amplifier and the switching means. The high-pass filter also reduces the overall noise level in the microphone assembly by filtering out low frequencies. An additional amplifier (not shown) may be connected between the high-pass filter and the switching means. This additional amplifier may be a buffer or a differential converter, such as a single-entity differential converter.

A low-pass filter (not shown) may be connected between the pre-amplifier and the switching means. This filter prevents undesired aliasing effects by limiting the frequency content of the signals before they are provided to the switching means, and thereby before they are provided to the A/D converter. The high-pass filter and the low-pass filter are preferably incorporated into the microphone pre-amplifier though, alternatively, the high-pass filter and the low-pass filter may optionally be separate from the microphone pre-amplifier.

The digital output signals on line 20 are raw signals in the sense that they have not been formatted according to any standard audio format. The raw digital output signals on line 20 are transmitted to the pure digital DSP 14 for further digital processing.

A formatting circuit (no shown) may be connected between A/D converter 12 and pure digital DSP 14. The formatting circuit formats the signals from the A/D converter 12 in accordance with a digital audio standard, such as, for example, S/PDIF, AES/EBU, I²S, or any other suitable digital audio standard. Alternatively, the formatting may be performed by the pure digital DSP 14. The formatting circuit is preferably incorporated into the A/D converter 12, and may further include a digital filter. The pre-amplifier 10 may optionally include a high-pass filter and/or a low-pass filter like those described above.

The formatted digital output signals may be transmitted on line 20 to the pure digital DSP 14 for further processing or, because the digital output signals are formatted according to a digital audio standard, may be plugged into or incorporated directly into a device which is compliant with such digital audio standard, such as a portable audio or video device, for example.

The high-pass filter (not shown) typically comprises a capacitor and a resistor. The filtering effect of high-pass filter is minimised by selecting capacitor and resistor values making τ as large as possible, or in other word, ensure a very low cut-off frequency of the high-pass filter. Furthermore, it is essential to minimise the noise from the high-pass filter itself. This may be achieved by selecting a large capacitance since the electronic noise from a capacitor is given by kT/C, where C is the capacitance, T is the temperature and k Planck's constant. It is clear that the electronic noise from the capacitor increases with a smaller capacitance.

A digital filter (not shown) may be positioned between the A/D converter, which preferably is a sigma-delta modulator, and the pure digital DSP. The digital filter removes the high frequency noise from the digital bit stream. Preferably, the digital filter is a digital decimation low-pass filter, which removes out-of-band quantization noise. The digital filter may be incorporated in a pure digital DSP 14, or incorporated in the A/D converter 12.

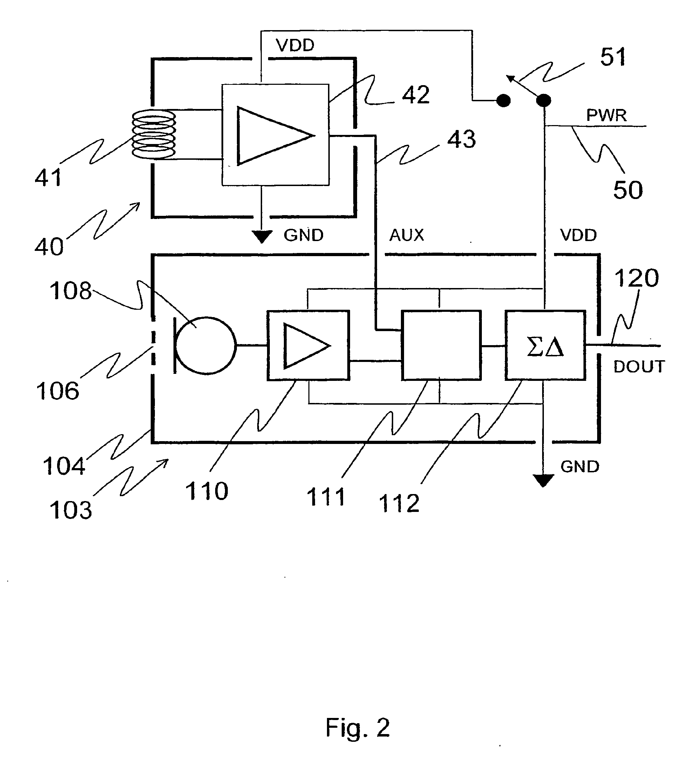

FIG. 2 shows a diagram of a microphone assembly 103 for hearing aid applications. Connections between the microphone assembly 103 and a telecoil unit 40 are indicated. The principal layout of the microphone assembly 103 corresponds to the microphone assembly 3 in FIG. 1. The microphone assembly 103 comprises a microphone assembly casing 104 that houses transducer 108, microphone pre-amplifier 110, A/D converter 112, and switching mean 111. By example the A/D converter 112 is indicated to be a sigma-delta converter type. Acoustical signals are detected by the microphone 108 via an acoustical port 106. The microphone assembly 103 has four externally accessible terminals: power supply voltage (VDD), ground (GND), auxiliary analog input (AUX), and digital output (DOUT).

The telecoil unit 40 in FIG. 2 comprises a telecoil 41 connected to a telecoil amplifier 42. The telecoil amplifier 42 has an output terminal 43 used to provide an analog electrical signal according to a signal picked up by the telecoil 41. The output terminal 43 of the telecoil unit 40 is connected to the microphone assembly 103 via its AUX input terminal. The AUX terminal is connected to the switching means 111 which is adapted to select if either an analog signal from the microphone preamplifier 110 or if a signal from the telecoil unit 40 is connected to the A/D converter 112. Thereby, the switching means is adapted to select which of the two analog signal sources microphone or telecoil is to be fed to the A/D converter and thereby converted to a digital signal appearing on the DOUT terminal 120 of the microphone assembly.

A two position switch 51 is used to either connect or disconnect a power supply terminal (VDD) of the telecoil amplifier 42 to a power supply line 50 connected to a power supply source (PWR). The VDD terminal of the microphone assembly 103 is permanently connected to the power supply line 50 so as to permanently supply the preamplifier 110, the switching means 111, and the A/D converter 112 with supply voltage.

The switch 51 is used to select between the telecoil unit 40 and the microphone 108 as signal source. In one position the switch 51 connects the telecoil amplifier 42 to the power source line 50. The telecoil unit 40 is hereby active and the telecoil amplifier 42 is adapted to provide an AC signal according to a signal picked up by the telecoil 41 on its output terminal 43. The telecoil amplifier 42 is adapted to superimpose this AC signal on a DC signal. The switching means 111 is adapted to detect a DC voltage level applied to the AUX terminal and hereby enable the AUX input if the DC voltage level is above a specified threshold. In another position of the switch 51 there is no connection between the power source line 50 and the VDD terminal of the telecoil amplifier 42. Consequently, the telecoil amplifier 42 is inactive and there will be a very low voltage level on its output terminal 43.

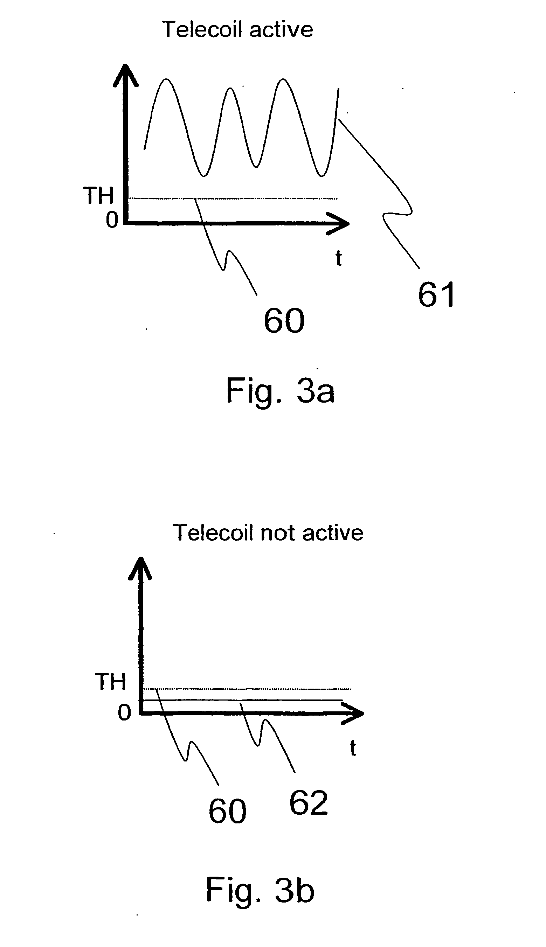

FIG. 3a shows a graph with an example of a voltage 61 applied to the AUX terminal of the microphone assembly 103 of FIG. 2. A DC voltage threshold TH for enabling the AUX input is sketched on the graph with a dotted line 60. As seen in FIG. 3a the voltage 61 level clearly exceeds the threshold 60 and thereby the switching means 111 will enable the AUX input and at the same time disable the signal from the microphone preamplifier 110. Consequently, the telecoil unit 40 is in an active mode whereas the microphone is in an deactivated mode.

FIG. 3b shows a graph corresponding to that of FIG. 3a. In this situation a voltage 62 applied to the AUX is below the voltage threshold 60. The swithcing means 111 will thus disable the AUX input and enable the signal from the microphone amplifier 110. Consequently, the telecoil unit 40 is in a deactivated mode whereas the microphone is in an activated mode.

With the above mentioned type of selection between microphone and telecoil signal for hearing aids it is possible to reduce the number of external terminals of the microphone assembly 103 to four. This is possible since the AUX terminal serves as analog input terminal as well as control terminal for selecting which input signal source to be active.

If more than one auxiliary analog input is preferred, there is number of different strategies for selecting which of the signal sources to be active. An example of such strategy is the following. The switching means is adapted to detect a DC or an AC signal levels of the more than one received auxiliary analog input signals, such as previously described. If none of the auxiliary signals source are detected to be active, the swithcing means will select the signal from the internal microphone. If one of the auxiliary signal sources is detected to be active, this auxiliary signal source will be selected by the switching means. If two or more auxiliary signal sources are detected to be active, the auxiliary analog inputs may have a preselected order of priority so that the active auxiliary analog signal with the highest priority is the one to be selected by the switching means.

While the present invention has been described with reference to one or more particular embodiments, those skilled in the art will recognize that many changes may be made thereto without departing from the scope of the present invention. Each of these embodiments and obvious variations thereof is contemplated as falling within the scope of the claimed invention, which is set forth in the following claims.

## Claims

1. A microphone assembly comprising
- a transducer (8) for receiving acoustic waves through a sound inlet port (6), and for converting received acoustic waves to analog audio signals,
- a pre-amplifier (10) having an input and an output terminal, the input terminal being connected to the transducer (8) so as to receive analog audio signals from the transducer (8),
- switching means (11) having one or more input terminals, and an output terminal, a first input terminal of the one or more input terminals being connected to the output terminal of the pre-amplifier (10) so as to receive amplified analog audio signals from the pre-amplifier, and
- an analog-to-digital converter (12) having an input and an input/output terminal, the input terminal being connected to the output terminal of the switching means so as to convert received analog audio signals to digital audio signals.

2. A microphone assembly according to claim 1, wherein the switching means (11) is configured as an electronic switching means.

3. A microphone assembly according to claim 2, wherein the switching means (11) comprises two input terminals, and wherein a second input terminal of the switching means is adapted to receive an auxiliary analog audio signal.

4. A microphone assembly according to claim 2, wherein each of the one or more input terminals other than the first input terminal are adapted to receive auxiliary analog audio signals.

5. A microphone assembly according to claim 3 or 4, wherein the switching means (11) is configured so as to be controlled by a characteristic of a received auxiliary analog audio signal.

6. A microphone assembly according to claim 5, wherein the characteristic controlling the switch relates to a DC voltage level of the received auxiliary analog audio signal.

7. A microphone assembly according to claim 1, wherein the switching means (11) is configured so as to be controlled by characteristics of an input/output signal provided to the input/output terminal of the analog-to-digital converter.

8. A microphone assembly according to claim 7, wherein the input/output signal provided to the input/output terminal of the analog-to-digital converter (12) is a digital data bus.

9. A microphone assembly according to claim 3, wherein the switching means (11) is configured so as to be controlled by providing a predetermined supply voltage level to the microphone assembly.

10. A microphone assembly according to any of claims 1-4, wherein the switching means (11) is configured so as to be controlled by a coded clock signal provided to the microphone assembly.

11. A microphone assembly according to claim 10, wherein the coded clock signal is coded by keeping the clock signal constant over a predetermined time period.

12. A microphone assembly according to any of claims 1-3, wherein the switching means (11) is configured so as to be controlled by a control signal superimposed a supply voltage level provided to the microphone assembly.

13. A microphone assembly according to claim 1 or 2, wherein an auxiliary analog audio signal is superimposed a supply voltage level provided to the microphone assembly.

14. A microphone assembly according to any of the preceding claims, further comprising filter means between the transducer and the analog-to-digital converter.

15. A microphone assembly according to claim 14, wherein the filter means is positioned between the pre-amplifier and the switching means so as to filter amplified analog audio signals.

16. A microphone assembly according to claim 14, wherein the filter means is positioned between the switching means and the analog-to-digital converter.

17. A microphone assembly according to any of claims 14-16, wherein the filter means comprises a high-pass filter.

18. A microphone assembly according to any of the preceding claims, wherein the analog-to-digital converter (12) comprises a sigma-delta modulator.

19. A microphone assembly according to claim 18, wherein the pre-amplifier, the switching means (11) and the sigma-delta modulator are integrated on a chip so as to form a monolithic integrated circuit.

20. A microphone assembly according to any of claims 14-17**,** wherein the pre-amplifier (10), the switching means (11), the analog-to-digital converter (12), and at least part of the filter means are integrated on a chip so as to form a monolithic integrated circuit.

21. A microphone assembly according to any of claim 14-17, wherein the pre-amplifier (10), the switching means (11), the analog-to-digital converter (12), and at least part of the filter means are implemented on separate chips so as to form separate electronic circuits.

22. A microphone assembly according to claim 19, further comprising a digital filter connected to the output terminal of the sigma-delta modulator, said digital filter forming part of the monolithic integrated circuit.

23. A microphone assembly according to claim 22, wherein the digital filter is a digital decimation low-pass filter.

24. A microphone assembly according to claim 1, further comprising a low-pass filter between the pre-amplifier and the switching means so as to low-pass filter amplified analog audio signals.

25. A microphone assembly according to claim 1, further comprising a band-pass filter between the pre-amplifier and the switching means so as to band-pass filter amplified analog audio signals.

26. A microphone assembly according to claim 14, further comprising an amplifier between the filter means and the switching means so as to amplify the filtered analog audio signals.

27. A microphone assembly according to claim 26, wherein the amplifier forms part of a monolithic integrated circuit further comprising the pre-amplifier, the switching means, the filter means and the analog-to-digital converter.

28. A microphone assembly according to any of the preceding claims, wherein the transducer is a silicon-based transducer.

29. A microphone assembly according to any of the preceding claims, further comprising a capacitor, said capacitor being adapted to be charged by energy contained in a clock signal provided to the microphone assembly, and being adapted to provide power to the microphone assembly, the capacitor being re-charged continuously by the provided clock signal.

30. A microphone assembly according to any of the preceding claims, said microphone assembly being, via the input/output terminal of the analog-to-digital converter, connected to a pure digital signal processor for further signal processing.

31. A portable unit comprising a microphone assembly according to any of the preceding claims.

32. A portable unit according to claim 31, wherein the portable unit is selected from the group consisting of hearing aids, assistive listening devices, mobile recording units, such as MP3 and minidisk recorders; and mobile communication units, such as mobile or cellular phones.

## Patentansprüche

1. Mikrofonanordnung, umfassend
- einen Umwandler (8) zum Empfangen von akustischen Wellen durch eine Schalleinlassöffnung (6) und zum Umformen von empfangenen akustischen Wellen in analoge Audiosignale,
- einen Vorverstärker (10) mit einem Eingangsterminal und einem Ausgangsterminal, wobei das Eingangsterminal mit dem Umwandler (8) verbunden ist, um analoge Audiosignale vom Umwandler (8) zu empfangen,
- Schaltmittel (11) mit einem oder mehreren Eingangsterminal(en) und einem Ausgangsterminal, wobei ein erstes Eingangsterminal von dem einen Eingangsterminal oder den mehreren Eingangsterminalen mit dem Ausgangsterminal des Vorverstärkers (10) verbunden ist, um verstärkte analoge Audiosignale vom Vorverstärker zu empfangen, und
- einen Analog-zu-Digital-Umformer (12) mit einem Eingangs- und einem Eingangs-/Ausgangsterminal, wobei das Eingangsterminal mit dem Ausgangsterminal des Schaltmittels verbunden ist, um empfangene analoge Audiosignale in digitale Audiosignale umzuformen.

2. Mikrofonanordnung nach Anspruch 1, worin das Schaltmittel (11) als ein elektronisches Schaltmittel konfiguriert ist.

3. Mikrofonanordnung nach Anspruch 2, worin das Schaltmittel (11) zwei Eingangsterminale umfasst, und worin ein zweites Eingangsterminal des Schaltmittels dafür geeignet ist, ein analoges Hilfsaudiosignal zu empfangen.

4. Mikrofonanordnung nach Anspruch 2, worin jedes von dem einen Eingangsterminal oder den mehreren Eingangsterminalen, das anders als das erste Eingangsterminal ist, dafür geeignet ist/sind, analoge Hilfsaudiosignale zu empfangen.

5. Mikrofonanordnung nach Anspruch 3 oder 4, worin das Schaltmittel (11) so konfiguriert ist, um von einem Kennwert eines empfangenen analogen Hilfsaudiosignal gesteuert zu werden.

6. Mikrofonanordnung nach Anspruch 5, worin der Kennwert, der den Schalter steuert, ein DC-Spannungsniveau des empfangenen analogen Hilfsaudiosignals betrifft.

7. Mikrofonanordnung nach Anspruch 1, worin das Schaltmittel (11) so konfiguriert ist, um von Kennwerten eines Eingangs-/Ausgangssignals, die zum Eingangs-/Ausgangsterminal des Analog-zu-Digital-Umformers geliefert werden, gesteuert zu werden.

8. Mikrofonanordnung nach Anspruch 7, worin das Eingangs-/Ausgangssignal, das zum Eingangs-/Ausgangsterminal des Analog-zu-Digital-Umformers (12) geliefert wird, ein digitaler Datenbus ist.

9. Mikrofonanordnung nach Anspruch 3, worin das Schaltmittel (11) so konfiguriert ist, um durch Liefern eines vorbestimmten Versorgungsspannungsniveaus zur Mikrofonanordnung gesteuert zu werden.

10. Mikrofonanordnung nach irgendeinem der Ansprüche 1-4, worin das Schaltmittel (11) so konfiguriert ist, um von einem kodierten Taktsignal, das zur Mikrofonanordnung geliefert wird, gesteuert zu werden.

11. Mikrofonanordnung nach Anspruch 10, worin das kodierte Taktsignal dadurch kodiert wird, das Taktsignal während einer vorbestimmten Zeitspanne konstant zu halten.

12. Mikrofonanordnung nach irgendeinem der Ansprüche 1-3, worin das Schaltmittel (11) so konfiguriert ist, um von einem, dem Versorgungsspannungsniveau überlagerten Steuerungssignal, das zur Mikrofonanordnung geliefert wird, gesteuert zu werden.

13. Mikrofonanordnung nach Anspruch 1 oder 2, worin ein analoges Hilfsaudiosignal einem Versorgungsspannungsniveau überlagert ist, das zur Mikrofonanordnung geliefert ist.

14. Mikrofonanordnung nach irgendeinem der vorhergehenden Ansprüche, weiterhin umfassend Filtermittel zwischen dem Umwandler und dem Analog-zu-Digital-Umformer.

15. Mikrofonanordnung nach Anspruch 14, worin das Filtermittel zwischen dem Vorverstärker und dem Schaltmittel angeordnet ist, um verstärkte analoge Audiosignale zu filtern.

16. Mikrofonanordnung nach Anspruch 14, worin das Filtermittel zwischen dem Schaltmittel und dem Analog-zu-Digital-Umformer angeordnet ist.

17. Mikrofonanordnung nach irgendeinem der Ansprüche 14-16, worin das Filtermittel ein Hochpassfilter umfasst.

18. Mikrofonanordnung nach irgendeinem der vorhergehenden Ansprüche, worin der Analog-zu-Digital-Umformer (12) einen Sigma-Delta-Modulator umfasst.

19. Mikrofonanordnung nach Anspruch 18, worin der Vorverstärker, das Schaltmittel (11) und der Sigma-Delta-Modulator auf einem Chip integriert sind, um einen monolithisch integrierten Kreislauf zu bilden.

20. Mikrofonanordnung nach irgendeinem der Ansprüche 14-17, worin der Vorverstärker (10), das Schaltmittel (11), der Analog-zu-Digital-Umformer (12) und mindestens ein Teil des Filtermittels auf einem Chip integriert sind, um einen monolithisch integrierten Kreislauf zu bilden.

21. Mikrofonanordnung nach irgendeinem der Ansprüche 14-17, worin der Vorverstärker (10), das Schaltmittel (11), der Analog-zu-Digital-Umformer (12) und mindestens ein Teil des Filtermittels auf getrennten Chips implementiert sind, um getrennte elektronische Kreisläufe zu bilden.

22. Mikrofonanordnung nach Anspruch 19, weiterhin umfassend ein Digitalfilter, das mit dem Ausgangsterminal des Sigma-Delta-Modulators verbunden ist, wobei das Digitalfilter einen Teil des monolithisch integrierten Kreislaufs bildet.

23. Mikrofonanordnung nach Anspruch 22, worin das Digitalfilter ein digitales dezimierendes Tiefpassfilter ist.

24. Mikrofonanordnung nach Anspruch 1, weiterhin umfassend ein Tiefpassfilter zwischen dem Vorverstärker und dem Schaltmittel, um verstärkte analoge Audiosignale tiefpasszufiltern.

25. Mikrofonanordnung nach Anspruch 1, weiterhin umfassend ein Bandpassfilter zwischen dem Vorverstärker und dem Schaltmittel, um verstärkte analoge Audiosignale bandpasszufiltern.

26. Mikrofonanordnung nach Anspruch 14, weiterhin umfassend einen Verstärker zwischen dem Filtermittel und dem Schaltmittel, um die gefilterten analogen Audiosignale zu verstärken.

27. Mikrofonanordnung nach Anspruch 26, worin der Verstärker einen Teil eines monolitisch integrierten Kreislaufs bildet, weiterhin umfassend den Vorverstärker, das Schaltmittel, das Filtermittel und den Analog-zu-Digital-Umformer.

28. Mikrofonanordnung nach irgendeinem der vorhergehenden Ansprüche, worin der Umwandler ein auf Silicium basierter Umwandler ist.

29. Mikrofonanordnung nach irgendeinem der vorhergehenden Ansprüche, weiterhin umfassend einen Kondensator, wobei der Kondensator dafür angepasst ist, mit Energie geladen zu werden, die in einem Taktsignal vorkommt, das zur Mikrofonanordnung geliefert ist, und dafür angepasst ist, die Mikrofonanordnung mit Strom zu versorgen, wobei der Kondensator fortlaufend von dem gelieferten Taktsignal wiedergeladen wird.

30. Mikrofonanordnung nach irgendeinem der vorhergehenden Ansprüche, wobei die Mikrofonanordnung, via das Eingangs-/Ausgangsterminal des Analog-zu-Digital-Umformers, mit einem rein digital Signalprozessor für weitere Signalverarbeitung verbunden ist.

31. Tragbare Einheit, umfassend eine Mikrofonanordnung nach irgendeinem der vorhergehenden Ansprüche.

32. Tragbare Einheit nach Anspruch 31, worin die tragbare Einheit aus der Gruppe bestehend aus Hörgeräten, Hilfsabhörgeräten, mobilen Aufnahmeeinheiten, wie z.B. MP3- und minidiskrekordern; und mobilen Kommunikationseinheiten, wie z.B. Handys oder Funktelefonen, gewählt ist.

## Revendications

1. Assemblage micro comprenant
- un transducteur (8) pour recevoir des ondes acoustiques via un orifice d'admission du son (6) et pour convertir des ondes acoustiques reçues en signaux audio analogiques ;
- un préamplificateur (10) doté d'une borne d'entrée et d'une borne de sortie, la borne d'entrée étant connectée au transducteur (8) de façon à recevoir des signaux audio analogiques transmis par le transducteur (8) ;
- un moyen de commutation (11) doté d'une ou de plusieurs bornes d'entrée et d'une borne de sortie, une première borne d'entrée de la ou des bornes d'entrée étant connectée à la borne de sortie du préamplificateur (10) de façon à recevoir des signaux audio analogiques amplifiés depuis le préamplificateur ; et
- un convertisseur analogique-numérique (12) dotée d'une borne d'entrée et d'une borne d'entrée/sortie, la borne d'entrée étant connectée à la borne de sortie du moyen de commutation de façon à convertir des signaux audio analogiques reçus en signaux audio numériques.

2. Assemblage micro selon la revendication 1, dans lequel le moyen de commutation (11) est configuré comme un moyen de commutation électronique.

3. Assemblage micro selon la revendication 2, dans lequel le moyen de commutation (11) comprend deux bornes d'entrée et dans lequel une seconde borne d'entrée du moyen de commutation est adaptée pour recevoir un signal audio analogique auxiliaire.

4. Assemblage micro selon la revendication 2, dans lequel la ou chacune des bornes d'entrée autres que la première borne d'entrée est adaptée pour recevoir des signaux audio analogiques auxiliaires.

5. Assemblage micro selon la revendication 3 ou 4, dans lequel le moyen de commutation (11) est configuré de façon à être contrôlé par une caractéristique d'un signal audio analogique auxiliaire reçu.

6. Assemblage micro selon la revendication 5, dans lequel la caractéristique contrôlant le commutateur est liée à un niveau de tension c.c. du signal audio analogique auxiliaire reçu.

7. Assemblage micro selon la revendication 1, dans lequel le moyen de commutation (11) est configuré de façon à être contrôlé par des caractéristiques d'un signal d'entrée/sortie fourni à la borne d'entrée/sortie du convertisseur analogique-numérique.

8. Assemblage micro selon la revendication 7, dans lequel le signal d'entrée/sortie fourni à la borne d'entrée/sortie du convertisseur analogique-numérique (12) est un bus de données numérique.

9. Assemblage micro selon la revendication 3, dans lequel le moyen de commutation (11) est configuré de façon à être contrôlé en fournissant un niveau de tension d'alimentation prédéterminé à l'assemblage micro.

10. Assemblage micro selon l'une des revendications 1 à 4, dans lequel le moyen de commutation (11) est configuré de façon à être contrôlé par un signal d'horloge codé fourni à l'assemblage micro.

11. Assemblage micro selon la revendication 10, dans lequel le signal d'horloge codé est codé en maintenant le signal d'horloge constant pendant une durée prédéterminée.

12. Assemblage micro selon l'une des revendications 1 à 3, dans lequel le moyen de commutation (11) est configuré de façon à être contrôlé par un signal de commande en superposition sur un niveau de tension d'alimentation fourni à l'assemblage micro.

13. Assemblage micro selon la revendication 1 ou 2, dans lequel un signal audio analogique auxiliaire est superposé sur un niveau de tension d'alimentation fourni à l'assemblage micro.

14. Assemblage micro selon l'une des revendications précédentes, comprenant en outre un moyen de filtrage entre le transducteur et le convertisseur analogique-numérique.

15. Assemblage micro selon la revendication 14, dans lequel le moyen de filtrage est positionné entre le préamplificateur et le moyen de commutation de façon à filtrer les signaux audio analogiques amplifiés.

16. Assemblage micro selon la revendication 14, dans lequel le moyen de filtrage est positionné entre le moyen de commutation et le convertisseur analogique-numérique.

17. Assemblage micro selon l'une des revendications 14 à 16, dans lequel le moyen de filtrage comprend un filtre passe-haut.

18. Assemblage micro selon l'une des revendications précédentes, dans lequel le convertisseur analogique-numérique (12) comprend un modulateur delta sigma.

19. Assemblage micro selon la revendication 18, dans lequel le préamplificateur, le moyen de commutation (11) et le modulateur delta sigma sont intégrés sur une puce de façon à former un circuit intégré monolithique.

20. Assemblage micro selon l'une des revendications 14 à 17, dans lequel le préamplificateur (10), le moyen de commutation (11), le convertisseur analogique-numérique (12) et au moins une partie du moyen de filtrage sont intégrés sur une puce de façon à former un circuit intégré monolithique.

21. Assemblage micro selon l'une des revendications 14 à 17, dans lequel le préamplificateur (10), le moyen de commutation (11), le convertisseur analogique-numérique (12) et au moins une partie du moyen de filtrage sont implantés sur des puces séparées de façon à former des circuit électronique séparés.

22. Assemblage micro selon la revendication 19, comprenant en outre un filtre numérique connecté à la borne de sortie du modulateur delta sigma, ledit filtre numérique faisant partie du circuit intégré monolithique.

23. Assemblage micro selon la revendication 22, dans lequel le filtre numérique est un filtre passe-bas de décimation numérique.

24. Assemblage micro selon la revendication 1, comprenant en outre un filtre passe-bas entre le préamplificateur et le moyen de commutation de façon à filtrer en passe-bas des signaux audio analogiques amplifiés.

25. Assemblage micro selon la revendication 1, comprenant en outre un filtre passe-bande entre le préamplificateur et le moyen de commutation de façon à filtrer en passe-bande des signaux audio analogiques amplifiés.

26. Assemblage micro selon la revendication 14, comprenant en outre un amplificateur entre le moyen de filtrage et le moyen de commutation de façon à amplifier des signaux audio analogiques filtrés.

27. Assemblage micro selon la revendication 26, dans lequel l'amplificateur fait partie d'un circuit intégré monolithique comprenant en outre le préamplificateur, le moyen de commutation, le moyen de filtrage et le convertisseur analogique-numérique.

28. Assemblage micro selon l'une des revendications précédentes, dans lequel le transducteur est un transducteur à base de silicone.

29. Assemblage micro selon l'une des revendications précédentes, comprenant en outre un condensateur, ledit condensateur étant adapté pour être chargé par l'énergie contenue dans un signal d'horloge fourni à l'assemblage micro et étant adapté pour fournir de l'électricité à l'assemblage micro, ledit condensateur étant continuellement rechargé par le signal d'horloge fourni.

30. Assemblage micro selon l'une des revendications précédentes, ledit assemblage micro étant, via la borne d'entrée/sortie du convertisseur analogique-numérique, connecté à un processeur de signal numérique pur en vue d'un traitement ultérieur du signal.

31. Unité portative comprenant un assemblage micro selon l'une des revendications précédentes.

32. Unité portative selon la revendication 31, dans laquelle l'unité portative est sélectionnée parmi le groupe des aides auditives, des aides de suppléance à l'audition, des unités d'enregistrement portables, telles que des enregistreurs MP3 et minidisque, et des unités de communication portables, telles que des téléphones portables ou cellulaires.
